# EUROPEAN PATENT APPLICATION

(11) **EP 4 841 547 A1**
(43) Date of publication of application: **18.11.2026**
(21) Application number: 26178311.2
(22) Date of filing: 12.05.2026
(51) Int. Cl.: G06Q 40/06, G06Q 20/06

(54) **METHOD FOR AUTOMATIC TOKEN MANAGEMENT**

(30) Priority: 13.05.2025 IT 202500010724
(71) Applicant: SISPA Quality S.r.l., 25050 Pian Camuno (BS) (IT)
(72) Inventor: GREGORINI, Paride, 25050 Pian Camuno (BS) (IT)
(74) Representative: Autuori & Partners S.R.L.

(57) **Abstract**

A method for the automatic management of digital tokens, comprising the steps of calculating the capital gain at the time of sale of a token, determination of a withdrawal share correlated to said capital gain and automatic removal of said determined withdrawal share. Optionally, sending of such withdrawn share to a restricted wallet.

## Description

### Field of application

The invention is positioned in the field of blockchain technologies, smart contracts and tokenomics applied to NFT marketplaces, decentralized finance (DeFi) and ESG management and decentralized digital ecosystems and particularly relates to a method for the automated management of tokens with an automated redistributive system and transparent.

### State of the Art

Token management involves systems to control issuance, distribution,
use and governance.

Marketplaces known for token management show high volatility in the
value of tokens. In this sense, systems are known to maintain the value of the token that provide so-called burning mechanisms in which, at each transaction, a part of the token is 'burned' to promote deflation.

This type of system and token management method requires the
selective intervention to burn an amount of tokens that must be determined by the governance through the relevant regulation mechanisms.

Such interventions are therefore one-off and require constant monitoring
of the tokens by the governance to intervene at the right time.

### Presentation of the invention

The purpose of this invention is to at least partially overcome the
aforementioned drawbacks, providing a method for the automatic management of tokens automatic.

A further purpose of this invention is to provide a
system for the automatic management of tokens.

These purposes, as well as others that will become clearer below, are achieved
by a method and a system in accordance with what is described, illustrated and/or claimed herein.

### Brief description of the drawings

Further features and advantages of the invention will become more evident in light of the detailed description of some preferred embodiments but
not exclusive to the invention, illustrated by way of non-limiting example with the aid of the attached drawing sheets in which:

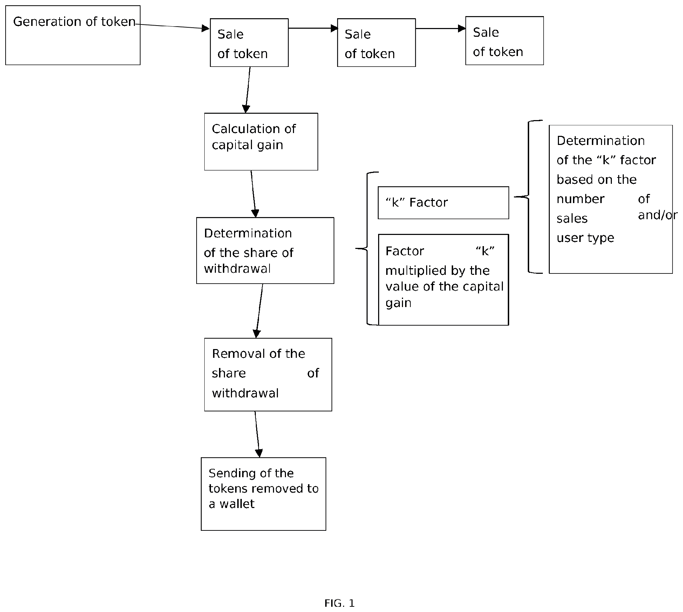

FIG. 1 schematically represents the automatic token management method.

### Detailed description of some preferred embodiments

The digital token management method can be applied to any platform
based on blockchain that requires a mechanism for exchange, incentivization, decentralized economic governance.

Essentially, as better explained below, the management method may
include at least a phase of capital gain calculation, determination of a withdrawal quota and removal of such quota. In this way, the method can automatically manage the tokens without requiring interventions from the governance.

The method provides for a series of automated operations via smart contracts to ensure automatic management with transparency, security, and scalability, which reduces the typical inefficiencies known in digital token management.

The method is based on a set of operations programmed on smart contracts that regulate the issuance, distribution, use, and governance of the token within a decentralized ecosystem.

The method may be based on the use of a blockchain infrastructure and smart contracts to monitor digital token transactions.

Essentially, the method may include the phases of:
- calculation of the capital gain at the time of sale of a token;
- determination of a withdrawal quota related to the capital gain;
- automatic removal of such determined withdrawal quota.

Thanks to these features, the tokens are managed automatically, that is, they are automatically kept under control without the need for one-off interventions, without
the need for active surveillance by the governance or interventions by
the latter and, above all, without the need for burning mechanisms.

In more detail, the capital gain can be calculated by the difference between the sale value and the purchase value of the token.

The withdrawal quota may be directly linked to the value of the capital gain,
for example, the withdrawal quota may be a fraction of the capital gain. This fraction
may be a parameter "k". For example, the parameter "k" could be 10%. In this case, the withdrawal quota can be determined by multiplying "k" by the value of the capital gain.

It is understood that the withdrawal quota may have a different value. In fact, the parameter "k" may have a different value, for example 8% or 6%.

Possibly, the withdrawal parameter "k" may vary over time. For example,
it may progressively decrease over time or as the number of sales operations increases of sales.

For example, in the case of particularly active users and/or those staking, the value of the withdrawal parameter "k" may be reduced compared to the initial predefined value, according to transparent and preset algorithmic logics in the smart contract.

For example, the default value of "k" may be 10%. If the user is
particularly active after a predetermined number of transactions associated with the same
user, for example 1000, the value of the withdrawal parameter "k" applied to subsequent
capital gains may decrease from 10% to 8%. Or after a token has undergone numerous
exchanges, for example it has been sold more than 500 times, for that specific token the parameter "k" withdrawal may decrease from 10% to 8%.

In any case, advantageously, the withdrawal quota will be applied only to the
capital gain. In other words, in the case of an even exchange or a decrease in value, no withdrawal quota will be applied.

Thanks to the above, only in the case of an increase in value will the token be "reduced" through the withdrawal quota, while in the case of an even exchange or a decrease in
value, no withdrawal will be made. This method therefore automatically allows to
control the tokens.

The removed quotas may be accumulated in a dedicated wallet. The latter
may preferably be used for positive social and environmental impacts such as
for example, though not exhaustive, emission reduction, reforestation projects, reclamation, sustainable mobility, redevelopment of living spaces or abandoned villages and other projects with regenerative and positive social and environmental impact.

The automatic management method may therefore include the following steps:
- setting the preset value of the parameter "k";
- calculation of the capital gain at the time of the token sale;
- determination of the withdrawal amount by multiplying the value of the capital gain by "k";
- automatic removal of the determined withdrawal amount;
- optionally, sending the withdrawn amount to a restricted wallet.

Optionally, before determining the withdrawal amount, the following steps may be provided:
- determination of the number of token transactions and/or determination of the number of transactions by the user selling the token;
- modification of the preset parameter "k".

Appropriately, the above steps may be applied to a plurality of tokens. In more detail, the method may include the steps of:
- tracking a plurality of purchase and sale operations relating to a plurality of tokens, preferably via smart contract;
- identification of sale operations that generate capital gain;
- calculation of the capital gain, determination of the withdrawal amount, and removal automatic of the latter for each sale operation that generates capital gain.

Appropriately, a system may be provided to implement the steps of the method described above.

For example, the system includes:
- at least one digital token, which may preferably but not exclusively be generated by a certified project with positive social or environmental impact;
- a smart contract that records all purchase and sale operations of at least one token and identifies cases where there is a resale at a higher price than the purchase price, that is, when a capital gain is generated;
- a computational module that automatically determines the capital gain of the resale operation;
- a module to automatically determine a withdrawal amount (for example the 10% of the capital gain) and to remove this withdrawal quota and to send the latter to a wallet, preferably of a restricted type and configured to receive exclusively such tokens.

The system may possibly include an autonomous organization
decentralized DAO that controls the restricted wallet and, through public governance, determines the destination of the collected funds, for example towards environmental projects.

The DAO can be implemented through parameterized smart contracts, in which
the following can be predefined:
- the minimum quorums for decision approval;
- the voting rights for each user category;
- the validity conditions of the proposals;
- the limits of automatic spending and allocation thresholds.

The system can be designed to operate on any blockchain infrastructure
compatible with smart contracts, both public and permissioned. All operations are traceable, immutable, and accessible for public verification.

### Example 1

A user buys 100 environmental digital tokens at a price of €0.10 each
equal to a value of €10; after a certain period, sells them at €0.25 each, equal
to a value of €25.

The system automatically determines the capital gain of €15, determines the quota of €1.50 (10% of the capital gain) and removes this quota which is transferred
automatically in real time to the restricted wallet controlled by the DAO.

### Example 2

A user buys 1,000 tokens at €0.50 each, equal to a value of €500, and
sells them at €0.80 each, equal to a value of €800.

The system automatically determines the capital gain of €300, determines the quota of €24 (8% of the capital gain) and removes this quota which is automatically transferred
in real time to the restricted wallet controlled by the DAO.

### Example 3

A user buys 500 tokens at €1.00 each, equal to a value of €500, and resells at €0.90 equal to a value of €450.

The system automatically determines the absence of capital gain, therefore no withdrawal amount is determined and no amount is removed.

In an optional implementation mode of the system, it may be provided for an
integrated incentive model aimed at promoting trading, holding, and
active participation by holders of environmental digital tokens.

The model is structured on multiple functional levels, implementable through smart contracts and additional logical components, and is aimed at increasing token circulation,
participation in governance, and the economic-social sustainability of the system.

In particular, the following optional features are envisaged:
- reputation system: each user accumulates reputation points based on the frequency and quantity of transactions performed, participation in governance DAO, proposal or approval of environmental projects, as well as holding tokens for a prolonged period through staking mechanisms. Reputation points can be used to obtain enhanced voting rights or priority access to new tokenized issuances.
- Environmental match funding program: for transactions that generate a capital gain above a determined threshold, the system may provide for co-funding by the DAO in favor of an environmental project on behalf of the user, incentivizing high-value transactions with strong positive impact.
- Environmental cashback: transactions carried out between wallets certified as "green" or with high positive impact can receive a percentage of cashback in tokens, funded by an incentive treasury integrated into the DAO.
- Periodic challenges and gamification - Green Challenges: the DAO can activate dynamics of gamification, proposing monthly challenges to users (e.g. minimum number of transactions or DAO participations) with consequent issuance of symbolic prizes (NFTs, badges, bonus tokens), thus increasing user engagement.
- Real spendability of the token: the token can be used as a means of payment or discount for goods and services with positive environmental impact, also through agreements with third parties participating in the DAO network.
- Dynamic issuance linked to the token price: in an advanced variant of the system, the algorithm that determines the quantity of tokens to be issued in response to a given virtuous action takes into account the current value of the token itself on the market (e.g. price on exchange or DEX). This value can be obtained through oracles or blockchain price feeds.
- The environmental impact (e.g. kg of sorted waste, CO₂ avoided) is converted into tokens in a way inversely proportional to the value of the token, thus ensuring consistency and sustainability over time. For example: if the value of the token is €0.10, the user receives 1 token for each action equivalent to €0.10 of impact; if the value of the token is €1.00, the user receives 0.1 token for the same action. This model allows to stabilize the issuance of tokens, prevent inflation and promote a natural appreciation of the token over time, in line with the principle of economic sustainability.

All the functionalities described above can be activated individually or in combination, according to configurable parameters, and represent an evolutionary and preferential mode of the basic system covered by this invention

Further advantages of the described method and system are listed below:
- elimination of the need for deflationary mechanisms, burning, instead promoting the shared growth of the token's value;
- transparent redistribution of capital gains in favor of the environment;
- increased acceptance of the token by public and private entities;
- promotion of the active participation of token holders in the selection of projects to be financed;
- compliance with ESG principles and the new European directives on sustainable finance.

From the above description, it is clear that the invention achieves its intended purposes. set.

The invention is susceptible to numerous modifications and variants all falling within the inventive concept expressed in the attached claims. All details may be replaced by other technically equivalent elements, and the materials may be different as according to requirements, without departing from the scope of the invention.

Even if the invention has been described with particular reference to the attached figures, the reference numbers used in the description and in the claims are used to improve the understanding of the invention and do not constitute any limitation to the scope of protection claimed.

## Claims

1. A method for the automatic management of digital tokens, comprising the steps of:
- calculation of the capital gain at the time of sale of a token;
- determination of a withdrawal share correlated to said capital gain;
- automatic removal of said determined withdrawal share; optionally sending said withdrawn share to a restricted wallet.

2. Method according to the previous claim, comprising the steps of:
- setting a preset value of a parameter "k";
- determination of said withdrawal share by multiplying said capital gain value and said parameter "k".

3. Method according to the previous claim, comprising before said step of determining the withdrawal share, the steps of:
- determination of the number of token transactions and/or determination of the number of transactions of the user selling the token;
- variation of the preset parameter "k" to reduce its value.
12. Method according to any of the preceding claims,
comprising the steps of:
- tracking the purchase and sale operations of a plurality of tokens by means of smart contract;
- identification of sales operations that generate capital gain;
- calculation of the capital gain, determination of said withdrawal share and removal automatic removal of said withdrawal share for each sale operation of each token.

4. System for the automatic management of digital tokens, comprising;
- at least one digital token;
- a smart contract that records all purchase and sale operations of at least one token and identifies cases where there is a sale at a price higher than the purchase price;
- a computational module that automatically determines the value of the capital gain;
- a module to perform the operations of the method according to any of the previous claims.

5. System according to the previous claim comprising:
- a module for detecting the difference between the purchase price and the sale price of the token;
- a module for calculating the value of the capital gain obtained from the sale of the token;
- an automatic withdrawal mechanism for a predetermined share of the calculated capital gain;
- a wallet bound to receive the withdrawn shares, configured to accept exclusively funds deriving from such mechanism;
a decentralized autonomous organization (DAO) configured to manage the bound wallet.

6. System according to claim 5, in which the digital token is generated as a result of documented activities of social and/or environmental impact validated through measurable and verifiable parameters.

7. System according to any of claims 4 to the previous one, in which the automatic withholding on the capital gain is applied exclusively in the event that the resale price of the token is higher than the purchase price.

8. System according to any of the preceding claims, in which the bound digital wallet is publicly accessible via blockchain interfaces and allows the auditability of transactions.

9. System according to any of claims 4 to the previous one, in which the DAO is composed of token holders and governed by parameterized smart contracts, configured to:
- define minimum quorums for the validity of votes;
- assign differentiated or equal voting rights;
- set spending limits and automatic allocation thresholds;
- validate proposals through distributed consensus.

10. System according to any of claims 4 to the previous one, in which there is a mechanism for staking digital tokens by users is provided, which allows the reduction of the percentage withholding on the capital gain.

11. System according to any of claims 4 to the previous one, in which it is integrated a digital reputation system that assigns scores to users based on their transactional activity, participation in governance, and prolonged holding of tokens.

12. System according to any of claims 4 to the previous one, in which the issuance of the digital token is dynamically regulated based on the current market value of the token itself, so that the number of tokens issued per unit of environmental impact decreases proportionally to the increase in the value of the token, according to configurable parameters in the smart contract.
